(19) Europäisches Patentamt
European Patent Office
Office européen des brevets

(11) **EP 3 418 314 A1**

(12) **EUROPEAN PATENT APPLICATION**
published in accordance with Art. 153(4) EPC

(43) Date of publication:
**26.12.2018 Bulletin 2018/52**

(51) Int Cl.:
***C08G 63/672*** *(2006.01)*    ***C08L 1/02*** *(2006.01)*

(21) Application number: **17753030.0**

(22) Date of filing: **07.02.2017**

(86) International application number:
**PCT/JP2017/004427**

(87) International publication number:
**WO 2017/141772 (24.08.2017 Gazette 2017/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.02.2016 JP 2016025843**

(71) Applicant: **Adeka Corporation**
**Tokyo 116-0012 (JP)**

(72) Inventors:
• **TANAKA Yuki**
**Saitama-shi**
**Saitama 336-0022 (JP)**

• **FUKUMOTO Yugo**
**Saitama-shi**
**Saitama 336-0022 (JP)**
• **YAMAZAKI Yuji**
**Saitama-shi**
**Saitama 336-0022 (JP)**
• **HARADA Masashi**
**Saitama-shi**
**Saitama 336-0022 (JP)**
• **NAKATOMI Yudai**
**Saitama-shi**
**Saitama 336-0022 (JP)**

(74) Representative: **Gill Jennings & Every LLP**
**The Broadgate Tower**
**20 Primrose Street**
**London EC2A 2ES (GB)**

(54) **MODIFIER FOR RESIN, RESIN COMPOSITION, AND FILM IN WHICH SAME IS USED**

(57) Provided are: a resin modifier with which flexibility, transparency and bleed resistance can be balanced at a high level; a resin composition; and a film using the same. The resin modifier includes a random copolymer composed of a structural unit derived from an aliphatic dibasic acid, a structural unit derived from an alkylenediol, and a structural unit derived from a polyalkylene ether glycol, which random copolymer has a hydroxyl group or a carboxyl group at a terminal. The polyalkylene ether glycol is preferably a polyethylene ether glycol, and the alkylenediol is preferably at least one selected from the group consisting of ethylene glycol, 1,2-propylene glycol, 1,3-propanediol, 2-methyl-1,3-propanediol, 1,3-butanediol, 1,4-butanediol, neopentyl glycol, 3-methyl-1,5-pentanediol, and hexanediol.

**Description**

TECHNICAL FIELD

The present invention relates to: a resin modifier; a resin composition; and a film using the same. More particularly, the present invention relates to: a resin modifier with which flexibility, transparency and bleed resistance can be balanced at a high level; a resin composition; and a film using the same.

BACKGROUND ART

Cellulose-based resins are mainly characterized by generally having superior strength, transparency, gross and sheen as well as a smoother surface with better texture as compared to other synthetic resins. Therefore, cellulose-based resins are used in a very wide variety of applications such as sheets, films, wire coatings, toys, medical instruments, and food packaging materials.

However, cellulose-based resins have a problem attributed to their poor plasticity that they cannot be used in those applications where high flexibility is required. Thus, in order to avoid this problem, it is necessary to improve the flexibility by incorporating an appropriate plasticizer. As such a plasticizer, for example, triphenyl phosphate, tricresyl phosphate, diphenyl phosphate, triethyl phosphate, tributyl phosphate, dimethyl phthalate, diethyl phthalate, dimethoxyethyl phthalate, ethylphthalylethyl glycolate, butylphthalylbutyl glycolate, toluenesulfonamide, triacetin and pentaerythritol tetraacetate have been conventionally used.

However, none of these plasticizers satisfies a wide range of performances such as compatibility with cellulose-based resins, plasticization efficiency, non-volatility, light and heat stability, non-migratory property, non-extractability and water resistance, and this is impeding further expansion of the use of cellulose-based resin compositions.

Under these circumstances, Patent Document 1 proposes a cellulose-based resin composition obtained by adding a polyester-based plasticizer to a cellulose-based resin. This polyester-based plasticizer is obtained by polycondensation of a polybasic acid, a polyhydric alcohol and an ether alcohol, and 10 to 70% by mole of the polybasic acid is constituted by an aromatic dicarboxylic acid.

RELATED ART DOCUMENT

PATENT DOCUMENT

[Patent Document 1] Japanese Patent Publication No. 2009-173742

SUMMARY OF THE INVENTION

PROBLEMS TO BE SOLVED BY THE INVENTION

The polyester-based plasticizer disclosed in Patent Document 1 inhibits deterioration of the retainability of thermoplastic resins, particularly cellulose-based resins. The term "retainability" used herein refers to a property that the mass of a film is reduced due to bleeding or blooming, volatilization or the like of an additive such as a plasticizer to the outside of the film under a high-temperature and high-humidity environment. However, it is difficult to attain an excellent balance of flexibility and transparency of resin composition and bleed resistance using the polyester-based plasticizer disclosed in Patent Document 1.

In view of the above, an object of the present invention is to provide: a resin modifier with which flexibility and transparency of resin composition and bleed resistance can be balanced at a high level; a resin composition; and a film using the same.

MEANS FOR SOLVING THE PROBLEMS

The present inventors intensively studied to solve the above-described problems and consequently discovered that the problems can be solved by using a compound synthesized from the below-described components as modifier for resin composition, thereby completing the present invention.

That is, the resin modifier of the present invention is characterized by comprising a random copolymer composed of a structural unit derived from an aliphatic dibasic acid, a structural unit derived from an alkylenediol, and a structural unit derived from a polyalkylene ether glycol, which random copolymer has a hydroxyl group or a carboxyl group at a terminal.

In the resin modifier of the present invention, the polyalkylene ether glycol is preferably a polyethylene ether glycol. Further, in the resin modifier of the present invention, the alkylenediol is preferably at least one selected from the group consisting of ethylene glycol, 1,2-propylene glycol, 1,3-propanediol, 2-methyl-1,3-propanediol, 1,3-butanediol, 1,4-butanediol, neopentyl glycol, 3-methyl-1,5-pentanediol, and hexanediol. Still further, in the resin modifier of the present invention, the ratios of the structural unit derived from an aliphatic dibasic acid, the structural unit derived from an alkylenediol and the structural unit derived from a polyalkylene ether glycol are preferably 10 to 80% by mass, 5 to 80% by mass and 1 to 50% by mass, respectively. Yet still further, the resin modifier of the present invention preferably has a weight-average molecular weight of 1,000 to 3,000.

The resin composition of the present invention is characterized in that it is obtained by adding the resin modifier of the present invention to a resin.

In the resin composition of the present invention, the resin is preferably a cellulose-based resin. Further, in the resin composition of the present invention, the resin modifier is preferably added in an amount of 3 to 100 parts by mass with respect to 100 parts by mass of the resin.

The film of the present invention is characterized by comprising the resin composition of the present invention.

EFFECTS OF THE INVENTION

According to the present invention, a resin modifier with which flexibility and transparency of resin composition and bleed resistance can be balanced at a high level, a resin composition, and a film using the same can be provided.

MODE FOR CARRYING OUT THE INVENTION

Embodiments of the present invention will now be described in detail.

The resin modifier of the present invention (hereinafter, also referred to as "modifier") is a random copolymer composed of a structural unit derived from an aliphatic dibasic acid, a structural unit derived from an alkylenediol, and a structural unit derived from a polyalkylene ether glycol, which random copolymer has a hydroxyl group or a carboxyl group at a terminal. By using this resin modifier, the flexibility and transparency of resin composition and bleed resistance can be balanced at a high level. The resin modifier of the present invention and the resin composition of the present invention are described below in detail.

<Aliphatic Dibasic Acid>

In the modifier of the present invention, examples of the aliphatic dibasic acid constituting the structural unit derived from an aliphatic dibasic acid include saturated aliphatic dibasic acids, such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, and tetradecanedioic acid; and unsaturated aliphatic dibasic acids, such as maleic acid, fumaric acid, itaconic acid, citraconic acid, and mesaconic acid. Thereamong, succinic acid, glutaric acid, adipic acid, pimelic acid, suberic acid, azelaic acid, sebacic acid are more preferred, and adipic acid is particularly preferred. The structural unit derived from an aliphatic dibasic acid may be constituted by one aliphatic dibasic acid, or two or more aliphatic dibasic acids.

<Alkylenediol>

In the modifier of the present invention, examples of the alkylenediol constituting the structural unit derived from an alkylenediol include ethylene glycol, 1,2-propylene glycol, 1,3-propanediol, 1,3-butanediol, 1,4-butanediol, pentanediol, 3-methyl-1,5-pentanediol, hexanediol, neopentyl glycol, dimethylolheptane (2-butyl-2-ethyl-1,3-propanediol), nonanediol, 2,4-diethyl-1,5-pentanediol, 2-methyl-1,4-butanediol, octanediol, 2-ethylhexanediol, and 2-methyl-1,3-propanediol. Thereamong, ethylene glycol, 1,2-propylene glycol, 1,3-propanediol, 2-methyl-1,3-propanediol, 1,3-butanediol, 1,4-butanediol, neopentyl glycol, 3-methyl-1,5-pentanediol and hexanediol are more preferred, and ethylene glycol, 1,2-propylene glycol, 1,3-butanediol and 3-methyl-1,5-pentanediol are particularly preferred. The structural unit derived from an alkylenediol may be constituted by one alkylenediol, or two or more alkylenediols.

<Polyalkylene Ether Glycol>

In the modifier of the present invention, examples of the polyalkylene ether glycol constituting the structural unit derived from a polyalkylene ether glycol include polymethylene ether glycols, polyethylene ether glycols, poly-1,2-propylene ether glycols, polytrimethylene ether glycols, polytetramethylene ether glycols, polyneopentylene ether glycols, poly(ethylene oxide-propylene oxide) copolymers, poly(ethylene oxide-tetrahydrofuran) copolymers, and poly(ethylene oxide-propylene oxide-tetrahydrofuran) copolymers. Thereamong, polyethylene ether glycols are preferred. Further, among these polyalkylene ether glycols, ones having a weight-average molecular weight of 100 to 600 are more preferred, ones having a weight-average molecular weight of 150 to 300 are still more preferred, and those having a weight-average molecular weight of 150 to 200 are particularly preferred. The structural unit derived from a polyalkylene ether glycol may be constituted by one polyalkylene ether glycol, or two or more polyalkylene ether glycols.

The modifier of the present invention is a random copolymer composed of a structural unit derived from an aliphatic dibasic acid, a structural unit derived from an alkylenediol, and a structural unit derived from a polyalkylene ether glycol, which random copolymer has a hydroxyl group or a carboxyl group at a terminal, and the weight-average molecular weight thereof is preferably 1,000 to 3,000, more preferably 1,500 to 2,500. By controlling the weight-average molecular weight in this range, the effects of the present invention can be favorably obtained. The acid value of the modifier is preferably 1 or less.

Further, in the modifier of the present invention, the ratios of the structural unit derived from an aliphatic dibasic acid, the structural unit derived from an alkylenediol and the structural unit derived from a polyalkylene ether glycol are preferably 10 to 80% by mass, 5 to 80% by mass and 1 to 50% by mass, respectively. More preferably, the ratios of an aliphatic dibasic acid, an alkylenediol and a polyalkylene ether glycol are 30 to 70% by mass, 10 to 60% by mass and 5 to 40% by mass, respectively.

The resin modifier of the present invention can be manufactured by a known method. For example, the resin modifier of the present invention can be produced using an aliphatic dibasic acid, an alkylenediol and a polyalkylene ether glycol in the presence of a catalyst, such as dioctyl zirconium oxide, dibutyl tin oxide or tetraalkyl titanate. The ratios of these components used in the production can be designed as appropriate in accordance with the types of the respective components to be used as well as the properties, the molecular weight and the like of the desired modifier; however, the aliphatic dibasic acid, the alkylenediol and the polyalkylene ether glycol are used at ratios of preferably 10 to 80% by mass, 5 to 80% by mass and 1 to 50% by mass, more preferably 30 to 70% by mass, 10 to 60% by mass and 5 to 40% by mass, respectively.

The resin composition of the present invention is obtained by adding the resin modifier of the present invention to a resin. The resin is preferably, but not restricted to, a cellulose-based resin; however, the resin may also be a thermoplastic resin or a thermosetting resin. As the cellulose-based resin, a lower fatty acid ester of cellulose is preferred. The term "lower fatty acid" used herein means a fatty acid having not more than 6 carbon atoms. Examples of the lower fatty acid ester of cellulose include cellulose acetate; cellulose propionate; cellulose butyrate; mixed fatty acid esters, such as cellulose acetate propionate and cellulose acetate butyrate that are described in Japanese Unexamined Patent Application Publication No. H10-45804, Japanese Unexamined Patent Application Publication No. H8-231761, U.S. Patent No. 2,319,052 (Specification) and the like; and cellulose triacetate.

In the resin composition of the present invention, as a cellulose ester, cellulose esters synthesized using cotton linter, wood pulp, kenaf or the like as a raw material may be used singly or in combination. It is particularly preferred to use a cellulose ester synthesized from cotton linter singly or a combination of such cellulose esters.

Examples of a thermoplastic resin that can be used in the resin composition of the present invention include polyvinyl chloride resins, polyethylene resins, polypropylene resins, polystyrene resins, polyvinyl acetate resins, polyurethane resins, cellulose-based resins, acrylic resins, AS (acrylonitrile-styrene) resins, ABS (acrylonitrile-butadiene-styrene) resins, fluorocarbon resins, thermoplastic elastomers, polyamide resins, polyacetal resins, polycarbonate resins, modified polyphenylene ether resins, polyethylene terephthalate resins, polybutylene terephthalate resins, polylactic acid-based resins, cyclic polyolefin resins, and polyphenylene sulfide resin. These resins may be used singly, or two or more thereof may be used in combination.

Examples of the polyvinyl chloride resins include homopolymers, such as polyvinyl chloride and polyvinylidene chloride; and vinyl compound copolymers, such as copolymers of vinyl chloride or vinylidene chloride and vinyl acetate. These polyvinyl chloride resins may be used singly, or two or more thereof may be used in combination.

Examples of the polyethylene resins include low-density polyethylenes, medium-density polyethylenes, and high-density polyethylenes. These polyethylene resins may be used singly, or two or more thereof may be used in combination.

The polypropylene resins are not particularly restricted in terms of polymerization method, and examples of the polypropylene resins include homopolymers, random polymers, and block polymers. Such polypropylene resins may also be used singly, or two or more thereof may be used in combination.

Examples of the acrylic resins include polymethyl acrylate and polymethyl methacrylate. These acrylic resins may also be used singly, or two or more thereof may be used in combination.

Examples of the polyamide resins include aliphatic polyamides, such as nylon-6, nylon-66, nylon-10, nylon-12, and nylon-46; and aromatic polyamides produced from an aromatic dicarboxylic acid and an aliphatic diamine. These polyamide resins may also be used singly, or two or more thereof may be used in combination.

Examples of the polyacetal resins include polyformaldehyde, polyacetaldehyde, polypropionaldehyde, and polybutylaldehyde. These polyacetal resins may also be used singly, or two or more thereof may be used in combination.

In the resin composition of the present invention, the modifier is added in an amount of 3 to 100 parts by mass, preferably 5 to 80 parts by mass, with respect to 100 parts by mass of the resin. The reason for this is because, when the amount of the modifier is less than 3 parts by mass, a sufficient flexibility-imparting effect may not be obtained, whereas when the modifier is used in an amount of greater than 100 parts by mass, the modifier may cause bleeding.

In the resin composition of the present invention, a variety of additives, such as a phosphorus-based antioxidant, a phenolic antioxidant, a sulfur-based antioxidant, an ultraviolet absorbers and a hindered amine-based light stabilizer may also be incorporated.

Examples of the phosphorus-based antioxidant include triphenyl phosphite, tris(2,4-di-*tert*-butylphenyl)phosphite, tris(nonylphenyl)phosphite, tris(dinonylphenyl)phosphite, tris(mono- or di-mixed nonylphenyl)phosphite, bis(2-tert-butyl-4,6-dimethylphenyl)ethyl phosphite, diphenyl acid phosphite, 2,2'-methylene-bis(4,6-di-*tert*-butylphenyl)octyl phosphite, diphenyldecyl phosphite, phenyldiisodecyl phosphite, tributyl phosphite, tris(2-ethylhexyl)phosphite, tridecyl phosphite, trilauryl phosphite, dibutyl acid phosphite, dilauryl acid phosphite, trilauryl trithiophosphite, bis(neopentyl glycol)-1,4-cyclohexane dimethyl diphosphite, bis(2,4-di-*tert*-butylphenyl)pentaerythritol diphosphite, bis(2,6-di-*tert*-butyl-4-methylphenyl)pentaerythritol diphosphite, distearyl pentaerythritol diphosphite, phenyl-4,4'-isopropylidene diphenol-pentaerythritol diphosphite, tetra(C12-15 mixed alkyl)-4,4'-isopropylidene diphenyl phosphite, bis[2,2'-methylene-bis(4,6-diamylphenyl)]-isopropylidene diphenyl phosphite, hydrogenated-4,4'-isopropylidenediphenol polyphosphite, bis(octylphenyl)-bis[4,4'-*n*-butylidene-bis(2-*tert*-butyl-5-methylphenol)]-1,6-hexanediol diphosphite, tetratridecyl-4,4'-butylidene-bis(2-*tert*-butyl-5-methylphenol)diphosphite, hexa(tridecyl)-1,1,3-tris(2-methyl-5-*tert*-butyl-4-hydroxyphenyl)butane triphosphonite, 9,10-dihydro-9-oxa-10-phosphaphenanthrene-10-oxide, and 2-butyl-2-ethylpropanediol-2,4,6-tri-*tert*-butylphenol monophosphite.

Examples of the phenolic antioxidant include 2,6-di-*tert*-butyl-*p*-cresol, 2,6-diphenyl-4-octadecyloxyphenol, stearyl(3,5-di-*tert*-butyl-4-hydroxyphenyl)propionate, distearyl(3,5-di-*tert*-butyl-4-hydroxybenzyl)phosphonate, tridecyl-3,5-di-*tert*-butyl-4-hydroxybenzyl thioacetate, thiodiethylene-bis[ (3,5-di-*tert*-butyl-4-hydroxyphenyl)propionate], 4,4'-thiobis(6-*tert*-butyl-*m*-cresol), 2-octylthio-4,6-di(3,5-di-*tert*-butyl-4-hydroxyphenoxy)-*s*-triazine, 2,2'-methylene-bis(4-methyl-6-*tert*-butylphenol), bis[3,3-bis(4-hydroxy-3-*tert*-butylphenyl)butyric acid]glycol ester, 4,4'-butylidene-bis(4,6-di-*tert*-butylphenol), 2,2'-ethylidene-bis(4,6-di-*tert*-butylphenol), 1,1,3-tris(2-methyl-4-hydroxy-5-*tert*-butylphenyl)butane, bis[2-*tert*-butyl-4-methyl-6-(2-hydroxy-3-*tert*-butyl-5-methylbenzyl)phenyl]terephthalate, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3,5-di-*tert*-butyl-4-hydroxyphenyl)propionate]methane, 2-*tert*-butyl-4-methyl-6-(2-acryloyloxy-3-*tert*-butyl-5-methylbenzyl)phenol, 3,9-bis[2-(3-*tert*-butyl-4-hydroxy-5-methylhydrocinnamoyloxy)-1,1-dimethylethyl]-2,4,8,10-t etraoxaspiro[5.5]undecane], and triethylene glycol-bis[$\beta$-(3-*tert*-butyl-4-hydroxy-5-methylphenyl)propionate].

Examples of the sulfur-based antioxidant include dialkyl thiodipropionates, such as dilauryl thiodipropionate, dimyristyl thiodipropionate, myristylstearyl thiodipropionate, and distearyl thiodipropionate; and $\beta$-alkylmercaptopropionic acid esters of polyols, such as pentaerythritol-tetra($\beta$-dodecylmercaptopropionate).

Examples of the ultraviolet absorber include 2-hydroxybenzophenones, such as 2,4-dihydroxybenzophenone, 2-hydroxy-4-methoxybenzophenone, 2-hydroxy-4-octoxybenzophenone, 2-hydroxy-4-*tert*-butyl-4'-(2-methacryloyloxyethoxyethoxy)benzophenone and 5,5'-methylene-bis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-*tert*-octylphenyl)benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3-dodecyl-5-methylphenyl)benzotriazole, 2-(2-hydroxy-3-*tert*-butyl-5-C7 to C9 mixed alkoxy-carbonylethylphenyl)triazole, 2-(2-hydroxy-3,5-dicumylphenyl)benzotriazole, 2,2'-methylene-bis(4-*tert*-octyl-6-benzotriazolylphenol), and polyethylene glycol ester of 2-(2-hydroxy-3-*tert*-butyl-5-carboxyphenyl)benzotriazole; 2-(2-hydroxyphenyl)-1,3,5-triazines, such as 2-(2-hydroxy-4-hexyloxyphenyl)-4,6-diphenyl-1,3,5-triazine, 2-(2-hydroxy-4-methoxyphenyl)-4,6-diphenyl-1,3,5-triazine, 2-(2-hydroxy-4-octoxyphenyl)-4,6-bis(2,4-dimethylphenyl)-1,3,5-triazine, and 2-(2-hydroxy-4-acryloyloxyethoxyphenyl)-4,6-bis(2,4-dimethylphenyl)-1,3,5-triazine; benzoates, such as phenyl salicylate, resorcinol monobenzoate, 2,4-di-*tert*-butylphenyl-3,5-di-*tert*-butyl-4-hydroxybenzoate, 2,4-di-*tert*-amylphenyl-3,5-di-*tert*-butyl-4-hydroxybenzoate, and hexadecyl-3,5-di-*tert*-butyl-4-hydroxybenzoate; substituted oxanilides, such as 2-ethyl-2'-ethoxyoxanilide and 2-ethoxy-4'-dodecyloxanilide; and cyanoacrylates, such as ethyl-$\alpha$-cyano-$\beta,\beta$-diphenyl acrylate and methyl-2-cyano-3-methyl-3-(*p*-methoxyphenyl)acrylate.

Examples of the hindered amine-based light stabilizer include 2,2,6,6-tetramethyl-4-piperidyl stearate, 1,2,2,6,6-pentamethyl-4-piperidyl stearate, 2,2,6,6-tetramethyl-4-piperidylbenzoate, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)-bis(tridecyl)-1,2,3,4-butane tetracarboxylate, bis(1,2,2,6,6-pentamethyl-4-piperidyl)-bis(tridecyl)-1,2,3,4-butane tetracarboxylate, bis(1,2,2,6,6-pentamethyl-4-piperidyl)-2-butyl-2-(3,5-di-*tert*-butyl-4-hydroxybenzyl)malonate, 1-(2-hydroxyethyl)-2,2,6,6-tetramethyl-4-piperidinol/diethyl succinate polycondensates, 1,6-bis(2,2,6,6-tetramethyl-4-piperidylamino)hexane/dibromoethane polycondensates, 1,6-bis(2,2,6,6-tetramethyl-4-piperidylamino)hexane/2,4-dichloro-6-morpholino-*s*-triazine polycondensates, 1,6-bis(2,2,6,6-tetramethyl-4-piperidylamino)hexane/2,4-dichloro-6-*tert*-octylamino-*s*-triazin e polycondensates, 1,5,8,12-tetrakis[2,4-bis(*N*-butyl-*N*-(2,2,6,6-tetramethyl-4-piperidyl)amino)-*s*-triazine-6-yl]-1, 5,8,12-tetraazadodecane, 1,5,8,12-tetrakis[2,4-bis(*N*-butyl-*N*-(1,2,2,6,6-pentamethyl-4-piperidyl)amino)-*s*-triazine-6-yl] -1,5,8,12-tetraazadodecane, 1,6,11-tris[2,4-bis(*N*-butyl-*N*-(2,2,6,6-tetramethyl-4-piperidyl)amino-*s*-triazine-6-ylamino]und ecane, 1,6,11-tris[2,4-bis(*N*-butyl-*N*-(1,2,2,6,6-pentamethyl-4-piperidyl)amino-*s*-triazine-6-ylamino] undecane, 3,9-bis[1,1-dimethyl-2-{ tris(2,2,6,6-tetramethyl-4-piperidyloxycarbonyloxy }ethyl]-2,4,8,10-tetraoxaspiro[5.5]undecane, and 3,9-bis[1,1-dimethyl-2-{tris(1,2,2,6,6-pentamethyl-4-piperidyloxycarbonyloxy)butylcarbonyl oxy}ethyl]-2,4,8,10-tetraoxaspiro[5.5]undecane.

In the resin composition of the present invention, as required, other additive(s) such as a filler, a colorant, a cross-linking agent, an antistatic agent, an anti-plate-out agent, a surface treatment agent, a lubricant, a flame retardant, a fluorescent agent, an antifungal agent, an antibacterial agent, a metal inactivator, a mold-release agent, a pigment, a processing aid, and/or a foaming agent may also be incorporated.

The resin composition of the present invention comprises the modifier of the present invention, and there is no other particular restriction. The blending method and molding method thereof are not particularly restricted, and examples of the blending method include a mixing method using an ordinary blender, mixer or the like, a melt-kneading method using an extruder, and a method of mixing the materials along with a solvent and then casting the resulting solution. Examples of the molding method include extrusion molding, injection molding, stretch film molding, and blow molding. The shape of a molded article obtained by molding the resin composition of the present invention is not particularly restricted, and examples of the molded article include sheets, films and special-form articles.

Next, the film of the present invention will be described.

The film of the present invention is obtained from the resin composition of the present invention, and a method of producing a cellulose ester film obtained from cellulose ester is described below as one example.

A cellulose ester film is produced by flow-casting and drying a dope solution in which a cellulose ester is dissolved in a solvent. As required, the dope solution may be mixed with a variety of additives. A higher concentration of the cellulose ester in the dope solution is more preferred because the drying load required after the flow-casting of the dope solution on a support can be further reduced; however, an excessively high concentration of the cellulose ester leads to an increase in the filtering load and thus impairs the filtration accuracy. In order to attain both satisfactory drying load and satisfactory filtering load, the concentration of the cellulose ester is preferably 1 to 30% by mass, more preferably 2 to 20% by mass.

For the preparation of the dope solution, a solvent may be used singly, or two or more solvents may be used in combination. From the standpoint of the production efficiency, it is preferred to use a mixture of a good solvent and a poor solvent for the cellulose ester, and the mixing ratio of the good solvent and the poor solvent is preferably in a range of 70 to 98% by mass of the good solvent and 30 to 2% by mass of the poor solvent. With regard to the good solvent and the poor solvent that are used in the present invention, a solvent which independently dissolves the cellulose ester to be used is defined as "good solvent", whereas a solvent which, by itself, can only swell the cellulose ester or is incapable of dissolving the cellulose ester, is defined as "poor solvent". Accordingly, the good solvent and the poor solvent are variable depending on the average acetylation degree of cellulose and, for instance, acetone is a good solvent for a cellulose ester having an average acetylation degree of 55%, while it is a poor solvent for a cellulose ester having an average acetylation degree of 60%.

As apparent from the descriptions above, the good solvent and the poor solvent are not always unambiguously determined in all cases. For those cases where cellulose triacetate is used as a cellulose-based resin, organic halogen compounds such as methylene chloride and dioxolanes are exemplified as good solvents and, for those cases where cellulose acetate propionate is used, methylene chloride, acetone and methyl acetate are exemplified as good solvents, and examples of the poor solvent include methanol, ethanol, n-butanol, cyclohexane, and cyclohexanone.

As a method of dissolving a cellulose ester for the preparation of the dope solution, any commonly used method can be employed; however, it is preferred to employ a method in which the cellulose ester is dissolved with stirring by heating it under increased pressure in a temperature range that is not lower than the boiling point of the solvent under normal pressure and does not cause the solvent to boil, since such a method inhibits the generation of an aggregate-form undissolved matter called gel or lump. Alternatively, a method in which the cellulose ester is mixed with a poor solvent and thereby wetted or swollen and the resultant is subsequently dissolved in a good solvent by mixing can also be preferably employed. Further, a known cold dissolution method may also be employed. In cases where a cold dissolution method is employed, methyl acetate or acetone can be used as the good solvent. The increased pressure may be applied by a method of injecting an inert gas such as nitrogen gas or by increasing the vapor pressure of the solvent by heating. It is preferred that the heating be performed externally and, for example, a jacket-type heater is preferably used since the temperature is easily controllable.

From the standpoint of the solubility of the cellulose ester, the heating temperature after the addition of a solvent is preferably in a range that is not lower than the boiling point of the solvent under normal pressure and does not cause the solvent to boil; however, when the heating temperature is excessively high, the productivity is reduced due to an increase in the required pressure. The heating temperature is in a range of preferably 45 to 120°C, more preferably 60 to 110°C, still more preferably 70 to 105°C. Further, the pressure is adjusted such that the solvent does not boil at a preset temperature.

Subsequently, the resulting cellulose ester solution is filtered using an appropriate filter medium such as a filter paper. As the filter medium, one having a lower absolute filtration accuracy is more preferred for removal of undesired matters and the like; however, an excessively low absolute filtration accuracy leads to a problem that clogging of the filter medium is likely to occur. Thus, the absolute filtration accuracy of the filter medium is preferably 0.008 mm or less, more preferably in a range of 0.001 to 0.008 mm, still more preferably in a range of 0.003 to 0.006 mm. The material of the filter medium is not particularly restricted, and the filter medium may be made of any commonly used material; however, a filter medium made of a plastic such as polypropylene or Teflon (Registered Trademark) and a filter medium made of a metal such as stainless steel are preferred since these filter media do not release a fiber or the like.

The filtration of the dope solution can be performed by an ordinary method; however, it is preferred to employ a method of filtering the dope solution under increased pressure while heating it in a temperature range that is not lower than the boiling point of the solvent used under normal pressure and does not cause the solvent to boil, since the increase in the difference between the pressures on each side of the filter medium (hereinafter, may be referred to as "filtration pressure") is kept small. The filtration temperature is preferably 45 to 120°C, more preferably 45 to 70°C, still more preferably 45 to 55°C. The smaller the filtration pressure, the more preferred it is. The filtration pressure is preferably $1.6 \times 10^6$ Pa or less, more preferably $1.2 \times 10^6$ Pa or less, still more preferably $1.0 \times 10^6$ Pa or less.

The support used in the flow-casting (casting) step is preferably one made of endless belt-form or drum-form mirror-finished stainless steel. It is preferred that the temperature of the support in the casting step be 0° C to lower than the boiling point of the solvent. A higher temperature allows a faster drying rate; however, an excessively high temperature may cause foaming and deteriorate the flatness of the resulting film. The substrate temperature is thus preferably 0 to 50°C, more preferably 5 to 30°C. The method of controlling the support temperature is not particularly restricted and, for example, a method of blowing warm air or cold air onto the support or a method of bringing a warm-water vat into contact with the support may be employed. The method using a warm-water vat is more preferred since the heat is transferred more efficiently and the time required for bringing the support to a constant temperature is shorter. When warm air is used, it is necessary to use an air having a temperature higher than the target temperature. In order to allow the resulting cellulose ester film to exhibit good flatness, the amount of residual solvent at the time of removing the film from the support is preferably 10 to 120%, more preferably 20 to 40% or 60 to 120%, particularly preferably 20 to 30% or 70 to 115%.

In the present invention, the amount of residual solvent is defined by the following formula:

$$\text{Amount of residual solvent} = [(\text{Film mass before heat treatment - Film mass after heat treatment})/(\text{Film mass after heat treatment})] \times 100 \ (\%)$$

Here, the "heat treatment" performed at the time of measuring the amount of residual solvent refers to heating of the film at 115°C for 1 hour. In the step of drying the cellulose ester film, the film removed from the support is further dried such that the amount of residual solvent is controlled to be preferably 3% by mass or less, more preferably 0.5% by mass or less. In the film drying step, generally, a method in which the film is dried while being transferred by a roll suspension system or tenter system is employed.

Further, it is preferred that the film be subjected to width maintenance or stretching by a tenter system immediately after being removed from the support while a large amount of solvent still remains therein, since this exerts superior dimensional stability-improving effect. The means for drying the film is not particularly restricted, and the film can be dried using a hot air, infrared radiation, heating roll, microwave or the like. From the standpoint of simplicity, it is preferred that the drying be performed using hot air. It is preferred that the drying temperature be increased stepwise in a range of 40 to 150°C and, in order to improve the dimensional stability, it is more preferred that the drying be performed at a temperature of 50 to 140°C.

The thickness of the cellulose ester film is not particularly restricted; however, it is preferably 10 to 500 $\mu$m, more preferably 20 to 100 $\mu$m.

EXAMPLES

The present invention will now be described in more detail by way of examples thereof. However, the present invention is not restricted by the following examples by any means.

<Examples 1 to 11 and Comparative Examples 1 to 7>

The respective aliphatic dibasic acids, alkylenediols and polyalkylene ether glycols shown in Tables 1 to 5 were polycondensated under the below-described conditions, and the resulting compounds were used as resin modifiers. The weight-average molecular weights of the thus obtained compounds were as shown in Tables 1 to 5. The ratios of the components were as follows.

<Synthesis Conditions>

(Example 1)

A 1-L five-necked flask, to which a stirrer, a nitrogen-introducing tube, a thermometer, a fractionating column and a glass stopper (for sampling) were attached and a distilling receiver and a condenser tube were further attached to the end of the fractionating column, was used as a reaction apparatus. To this flask, as raw materials, succinic acid: 434.1 g (3.68 mol), ethylene glycol: 196.36 g (3.16 mol), polyethylene ether glycol (molecular weight = 200): 240 g (1.20 mol) and zirconium octylate as an esterification catalyst: 0.0048 g ($1.22 \times 10^{-5}$ mol) were added, and an esterification reaction was allowed to proceed under normal pressure at 230°C while removing the resulting water to outside the system. Once the distillation of the generated water came close to an end, the pressure inside the system was reduced (30 to 40 kPa) to continue the reaction. The esterification reaction was terminated when the acid value reached 0.51 (target: less than 1.0). Continuously, transesterification was allowed to proceed at 180 to 220°C under reduced pressure (2 kPa or less). The system was cooled when the hydroxyl value reached 62.29 (target: 60.65 to 64.12), and the resultant was filtered at 120°C using Celite, whereby a resin modifier of Example 1 was obtained in an amount of 677 g.

(Example 2)

Reaction and purification were performed in the same manner using the same reaction apparatus as in Example 1, except that the amount of succinic acid was changed to 403.9 g (3.42 mol) and ethylene glycol was changed to 219.3 g (2.88 mol) of propylene glycol, whereby a resin modifier of Example 2 was obtained in an amount of 669 g.

(Example 3)

Reaction and purification were performed in the same manner using the same reaction apparatus as in Example 1, except that the amount of succinic acid was changed to 378.6 g (3.21 mol) and ethylene glycol was changed to 238.6 g (2.65 mol) of 1,3-butanediol, whereby a resin modifier of Example 3 was obtained in an amount of 684 g.

(Example 4)

Reaction and purification were performed in the same manner using the same reaction apparatus as in Example 1, except that the amount of succinic acid was changed to 338.8 g (2.87 mol) and ethylene glycol was changed to 269.0 g (2.28 mol) of 3-methyl-1,5-pentanediol, whereby a resin modifier of Example 4 was obtained in an amount of 671 g.

(Example 5)

Reaction and purification were performed in the same manner using the same reaction apparatus as in Example 1, except that succinic acid was changed to 449.5 g (3.08 mol) of adipic acid and the amount of ethylene glycol was changed to 155.4 g (2.50 mol), whereby a resin modifier of Example 5 was obtained in an amount of 679 g.

(Example 6)

Reaction and purification were performed in the same manner using the same reaction apparatus as in Example 1, except that succinic acid was changed to 424.5 g (2.90 mol) of adipic acid and ethylene glycol was changed to 176.17 g (2.32 mol) of propylene glycol, whereby a resin modifier of Example 6 was obtained in an amount of 672 g.

(Example 7)

Reaction and purification were performed in the same manner using the same reaction apparatus as in Example 1, except that succinic acid was changed to 424.5 g (2.90 mol) of adipic acid and ethylene glycol was changed to 176.17 g (2.32 mol) of 1,3-propanediol, whereby a resin modifier of Example 7 was obtained in an amount of 677 g.

(Example 8)

Reaction and purification were performed in the same manner using the same reaction apparatus as in Example 1, except that succinic acid was changed to 402.9 g (2.76 mol) of adipic acid and ethylene glycol was changed to 194.0 g (2.15 mol) of 1,3-butanediol, whereby a resin modifier of Example 8 was obtained in an amount of 668 g.

(Example 9)

Reaction and purification were performed in the same manner using the same reaction apparatus as in Example 1, except that succinic acid was changed to 367.8 g (2.52 mol) of adipic acid and ethylene glycol was changed to 223.16 g (1.89 mol) of 3-methyl-1,5-pentanediol, whereby a resin modifier of Example 9 was obtained in an amount of 680 g.

(Example 10)

Reaction and purification were performed in the same manner using the same reaction apparatus as in Example 1, except that succinic acid was changed to 469.2 g (2.32 mol) of sebacic acid and the amount of ethylene glycol was changed to 103.78 g (1.67 mol), whereby a resin modifier of Example 10 was obtained in an amount of 677 g.

(Example 11)

Reaction and purification were performed in the same manner using the same reaction apparatus as in Example 1, except that succinic acid was changed to 451.5 g (2.23 mol) of sebacic acid and ethylene glycol was changed to 119.9 g (1.58 mol) of propylene glycol, whereby a resin modifier of Example 11 was obtained in an amount of 668 g.

(Comparative Example 1)

As raw materials, succinic acid: 555.9 g (4.71 mol) and ethylene glycol: 345.3 g (5.56 mol) were used. Synthesis and purification were performed by the same procedure using the same reaction apparatus as in Example 1, except that the target hydroxyl value of the transesterification was set at 54.74 to 57.55, whereby a resin modifier of Comparative Example 1 was obtained in an amount of 659 g.

(Comparative Example 2)

As raw materials, adipic acid: 301.6 g (2.06 mol) and polyethylene ether glycol (molecular weight = 200): 507.6 g (2.54 mol) were used. Synthesis and purification were performed by the same procedure using the same reaction apparatus as in Example 1, whereby a resin modifier of Comparative Example 2 was obtained in an amount of 678 g.

(Comparative Example 3)

As raw materials, phthalic anhydride: 374.4 g (2.53 mol), 1,3-butanediol: 196.8 g (2.18 mol), and polyethylene ether glycol (molecular weight = 200): 240.0 g (1.20 mol) were used. Synthesis and purification were performed by the same procedure using the same reaction apparatus as in Example 1, whereby a resin modifier of Comparative Example 3 was obtained in an amount of 669 g.

(Comparative Example 4)

As raw materials, adipic acid: 316.1 g (2.16 mol), terephthalic acid: 89.8 g (0.54 mol), 1,3-butanediol: 188.8 g (2.09 mol), and polyethylene ether glycol (molecular weight = 200): 240.0 g (1.20 mol) were used. Synthesis and purification were performed by the same procedure using the same reaction apparatus as in Example 1, whereby a resin modifier of Comparative Example 4 was obtained in an amount of 670 g.

(Comparative Example 5)

As raw materials, adipic acid: 232.5 g (1.59 mol), terephthalic acid: 176.2 g (1.06 mol), 1,3-butanediol: 183.6 g (2.04 mol), and polyethylene ether glycol (molecular weight = 200): 240.0 g (1.20 mol) were used. Synthesis and purification were performed by the same procedure using the same reaction apparatus as in Example 1, whereby a resin modifier of Comparative Example 5 was obtained in an amount of 662 g.

(Comparative Example 6)

As raw materials, succinic acid: 353.7 g (3.00 mol), phthalic anhydride: 190.12 g (1.28 mol), ethylene glycol: 300.9 g (4.85 mol), and ethylene glycol monobutyl ether: 68.1 g (0.58 mol) were used. Synthesis and purification were performed by the same procedure using the same reaction apparatus as in Example 1, except that the target hydroxyl value of the transesterification was set at less than 20, whereby a resin modifier of Comparative Example 6 was obtained in an amount of 680 g.

<Sample Preparation>

To a mixed solvent of 90 parts by mass of methylene chloride and 10 parts by mass of methyl alcohol, 4.7 parts by mass of acetyl cellulose (acetylation degree: 61.5%, polymerization degree: 260) as well as 60 parts by mass of each of the resin modifiers of Examples 1 to 11 and Comparative Examples 1 to 6 with respect to 100 parts by mass of the acetyl cellulose were added and dissolved with stirring. The thus obtained solution was flow-casted to form a film at a thickness of about 80 μm. For the thus obtained film, the tensile elastic modulus, the transparency and the bleed resistance were evaluated. The evaluation methods were as described below. For Comparative Example 7, the tensile elastic modulus, the transparency and the bleed resistance were also evaluated by the same procedures, except that no modifier was added.

<Tensile Elastic Modulus>

The tensile elastic modulus was measured for each of the thus obtained films in accordance with the film testing method prescribed in JIS K6251. From each sheet-form molded article, a #3 dumbbell piece (full length: 100 mm, parallel portion: 20 mm in length and 5 mm in width) was cut out as a test piece, and this test piece was stretched at a chuck distance of 25 mm and a tensile rate of 1 mm/min to measure the tensile elastic modulus of the test piece. The results thereof are shown in Tables 1 to 5. It is noted here that a tensile elastic modulus of 3,000 MPa or less was regarded as satisfactory.

<Transparency>

For each of the samples obtained above, the transparency was evaluated visually. The evaluation was made based on the following three-scale criteria. The results thereof are also shown in Tables 1 to 5.
Excellent: The sample was very clear.
Good: Hardly any turbidity was observed.
Acceptable: Slight turbidity was observed.

<Bleed Resistance>

The above-prepared films were each cut into a size of 10 cm × 10 cm and left to stand for 2 weeks at 23°C and 50% RH, after which bleeding on the surface of each sample was visually observed. Evaluation was made based on the following three-scale criteria. The results thereof are also shown in Tables 1 to 5.
Excellent: No bleeding was observed.
Good: Slight bleeding was observed.
Not acceptable: Severe bleeding was observed.

[Table 1]

|  | Example 1 | Example 2 | Example 3 | Example 4 |
|---|---|---|---|---|
| Aliphatic dibasic acid | SA | SA | SA | SA |
| Alkylene diol | EG | PG | 1,3-BG | 3-MPD |
| Polyalkylene ether glycol | #200 | #200 | #200 | #200 |
| Other | - | - | - | - |
| Weight-average molecular weight | 1,800 | 1,800 | 1,800 | 1,800 |
| Tensile elastic modulus (MPa) | 2,230 | 2,870 | 2,140 | 1,500 |
| Transparency | Good | Excellent | Excellent | Excellent |

(continued)

|  | Example 1 | Example 2 | Example 3 | Example 4 |
|---|---|---|---|---|
| Bleed resistance | Good | Excellent | Excellent | Excellent |

| SA: succinic acid |
|---|
| EG: ethylene glycol |
| PG: 1,2-propylene glycol |
| 1,3-BG: 1,3-butanediol |
| 3-MPD: 3-methyl-1,5-pentanediol |
| #200: Polyethylene Glycol 200 (manufactured by Aoki Oil Industrial Co., Ltd., weight-average molecular weight: 200) |

[Table 2]

|  | Example 5 | Example 6 | Example 7 | Example 8 | Example 9 |
|---|---|---|---|---|---|
| Aliphatic dibasic acid | AA | AA | AA | AA | AA |
| Alkylene diol | EG | PG | 1,3-PG | 1,3-BG | 3-MPD |
| Polyalkylene ether glycol | #200 | #200 | #200 | #200 | #200 |
| Other | - | - | - | - | - |
| Weight-average molecular weight | 1,800 | 1,800 | 1,800 | 1,800 | 1,800 |
| Tensile elastic modulus (MPa) | 1,600 | 2,140 | 1,290 | 1,860 | 1,530 |
| Transparency | Excellent | Excellent | Excellent | Excellent | Excellent |
| Bleed resistance | Excellent | Excellent | Excellent | Excellent | Excellent |

| AA: adipic acid |
|---|
| 1,3-PG: 1,3-propanediol |

[Table 3]

|  | Example 10 | Example 11 |
|---|---|---|
| Aliphatic dibasic acid | SeA | SeA |
| Alkylene diol | EG | PG |
| Polyalkylene ether glycol | #200 | #200 |
| Other | - | - |
| Weight-average molecular weight | 1,800 | 1,800 |
| Tensile elastic modulus (MPa) | 1,320 | 1,900 |
| Transparency | Good | Excellent |
| Bleed resistance | Good | Excellent |

| SeA: sebacic acid |
|---|

[Table 4]

|  | Comparative Example 1 | Comparative Example 2 | Comparative Example 3 |
|---|---|---|---|
| Aliphatic dibasic acid | SA | AA | PA |
| Alkylene diol | EG | - | 1,3-BG |
| Polyalkylene ether glycol | - | #200 | #200 |

(continued)

|  | Comparative Example 1 | Comparative Example 2 | Comparative Example 3 |
|---|---|---|---|
| Other | - | - | - |
| Weight-average molecular weight | 2,000 | 1,800 | 1,800 |
| Tensile elastic modulus (MPa) | 3,320 | 2,390 | 3,480 |
| Transparency | Good | Excellent | Excellent |
| Bleed resistance | Not acceptable | Not acceptable | Excellent |
| PA: phthalic acid | | | |

[Table 5]

|  | Comparative Example 4 | Comparative Example 5 | Comparative Example 6 | Comparative Example 7 |
|---|---|---|---|---|
| Aliphatic dibasic acid | AA (80) TPA (20) | AA (60) TPA (40) | SA (70) PA (30) | - |
| Alkylene diol | 1,3-BG | 1,3-BG | EG | - |
| Polyalkylene ether glycol | #200 | #200 | - | - |
| Other | - | - | EG-OBu | - |
| Weight-average molecular weight | 1,800 | 1,800 | 3,000 | - |
| Tensile elastic modulus (MPa) | 2,210 | 2,630 | 3,210 | 4,700 |
| Transparency | Excellent | Excellent | Excellent | Excellent |
| Bleed resistance | acceptable | acceptable | Excellent | Excellent |
| EG-OBu: ethylene glycol monobutyl ether<br>TPA: terephthalic acid | | | | |

From Tables 1 to 5 above, it is seen that, in the resin compositions according to the present invention, the flexibility, the transparency and the bleed resistance were balanced at a high level.

**Claims**

1. A resin modifier comprising a random copolymer composed of a structural unit derived from an aliphatic dibasic acid, a structural unit derived from an alkylenediol, and a structural unit derived from a polyalkylene ether glycol, which random copolymer has a hydroxyl group or a carboxyl group at a terminal.

2. The resin modifier according to claim 1, wherein said polyalkylene ether glycol is a polyethylene ether glycol.

3. The resin modifier according to claim 1 or 2, wherein said alkylenediol is at least one selected from the group consisting of ethylene glycol, 1,2-propylene glycol, 1,3-propanediol, 2-methyl-1,3-propanediol, 1,3-butanediol, 1,4-butanediol, neopentyl glycol, 3-methyl-1,5-pentanediol, and hexanediol.

4. The resin modifier according to any one of claims 1 to 3, wherein the ratios of said structural unit derived from an aliphatic dibasic acid, said structural unit derived from an alkylenediol and said structural unit derived from a polyalkylene ether glycol are 10 to 80% by mass, 5 to 80% by mass and 1 to 50% by mass, respectively.

5. The resin modifier according to any one of claims 1 to 4, which has a weight-average molecular weight of 1,000 to 3,000.

**6.** A resin composition obtained by adding the resin modifier according to any one of claims 1 to 5 to a resin.

**7.** The resin composition according to claim 6, wherein said resin is a cellulose-based resin.

**8.** The resin composition according to claim 6 to 7, wherein said resin modifier is added in an amount of 3 to 100 parts by mass with respect to 100 parts by mass of said resin.

**9.** A film comprising the resin composition according to any one of claims 6 to 8.

| INTERNATIONAL SEARCH REPORT | International application No. |
|---|---|
| | PCT/JP2017/004427 |

**A. CLASSIFICATION OF SUBJECT MATTER**
*C08G63/672*(2006.01)i, *C08L1/02*(2006.01)i

According to International Patent Classification (IPC) or to both national classification and IPC

**B. FIELDS SEARCHED**

Minimum documentation searched (classification system followed by classification symbols)
C08G63/672, C08L1/02

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)
CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X | WO 2009/093503 A1  (ADEKA Corp.),<br>30 July 2009 (30.07.2009),<br>claims; paragraph [0023]; comparative examples<br>1 to 4; tables 3 to 5<br>& JP 2009-173742 A       & US 2010/0292413 A1<br>claims; paragraph [0034]; comparative examples<br>1 to 4; tables 3 to 5<br>& EP 2241594 A1         & CN 101925648 A<br>& KR 10-2010-0109962 A   & TW 200944556 A | 1-9 |
| X | JP 2006-219649 A  (Taoka Chemical Co., Ltd.),<br>24 August 2006 (24.08.2006),<br>claims; paragraphs [0002], [0028], [0029],<br>[0036]; particularly, example 11<br>(Family: none) | 1-9 |

[X] Further documents are listed in the continuation of Box C.          [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 April 2017 (20.04.17) | 09 May 2017 (09.05.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**14**

# EP 3 418 314 A1

**INTERNATIONAL SEARCH REPORT**

International application No.

PCT/JP2017/004427

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 5-155809 A (Satoshi MATSUMOTO),<br>22 June 1993 (22.06.1993),<br>claims; examples; particularly, examples 5, 9,<br>17<br>& US 5364956 A<br>claims; examples; particularly, examples 5, 9,<br>17 | 1-6,8<br>7,9 |
| A | JP 2009-173740 A (ADEKA Corp.),<br>06 August 2009 (06.08.2009),<br>entire text<br>(Family: none) | 1-9 |
| A | JP 2009-173741 A (ADEKA Corp.),<br>06 August 2009 (06.08.2009),<br>entire text<br>(Family: none) | 1-9 |
| A | JP 2006-241378 A (Taoka Chemical Co., Ltd.),<br>14 September 2006 (14.09.2006),<br>entire text<br>(Family: none) | 1-9 |
| A | JP 49-7354 A (Asahi Denka Co., Ltd.),<br>23 January 1974 (23.01.1974),<br>entire text<br>(Family: none) | 1-9 |

Form PCT/ISA/210 (continuation of second sheet) (January 2015)

EP 3 418 314 A1
**EP 3 418 314 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009173742 A
- JP H1045804 B
- JP H8231761 B
- US 2319052 A
- JP 2009173742 A
- JP H1045804 B
- JP H8231761 B
- US 2319052 A

16